# EUROPEAN PATENT SPECIFICATION

(11) **EP 1 446 277 B1**
(45) Date of publication and mention of the grant of the patent: **20.06.2007**
(21) Application number: 02780185.1
(22) Date of filing: 20.11.2002
(51) Int. Cl.: B29C 63/34, F16L 55/165

(54) **COUPLING SYSTEM**
KUPPLUNGSSYSTEM
SYSTEME DE RACCORDEMENT

(30) Priority: 23.11.2001 NL 1019425
(43) Date of publication of application: 18.08.2004
(73) Proprietor: WAVIN B.V., 8011 CW Zwolle (NL)
(72) Inventor: ROELFSEMA, Marcel, NL-9503 PB Stadskanaal (NL); VAN DIJK, Berend, Jan, NL-7776 XA Slagharen (NL)
(74) Representative: Wittop Koning, Tom Hugo
(86) International application number: PCT/NL2002/000752
(87) International publication number: WO 2003/047843

(56) References cited:
- WO-A-93/23697
- WO-A-98/36207
- DE-A- 1 815 252
- PATENT ABSTRACTS OF JAPAN vol. 1997, no. 12, 25 December 1997 (1997-12-25) & JP 09 206824 A (OSAKA GAS CO LTD), 12 August 1997 (1997-08-12)

## Description

The present invention relates to a coupling system intended for fitting in an end of a pipe that is provided with a pipe liner, comprising a coupling piece that is designed for coupling the pipe to an object, which coupling piece comprises a first cylindrical part that lies in line with the pipe after fitting.

US 5,992,897 discloses a coupling system for coupling pipes provided with a pipe liner, in particular metal pipes provided with a plastic pipe liner for use in the petrochemical industry. In order to couple two of such pipes to each other, a coupling piece is fitted on the end of each of the pipes, which coupling piece comprises a first cylindrical part that lies in line with the pipe. The head end of the metal pipe is welded to a head end of the first cylindrical part of the coupling piece, the pipe liner running through into the first cylindrical part of the coupling piece. The pipe liner is subsequently clamped by means of a clamping ring that is pressed into the pipe liner, in such a way that a sealing connection is produced between the coupling piece and the pipe liner. The other end of the known coupling piec6⁻is provided with a flange, so that the two coupling pieces can be connected to each other by means of a conventional flange connection.

A disadvantage of this known coupling system is that the coupling piece must be welded to the pipe in order to obtain a sturdy connection. Not only is the welding of such a connection difficult and laborious, but the use of the coupling system is also limited to pipes to which the coupling piece can be welded.

The known coupling system is unsuitable for coupling an object to a plastic, concrete or cast iron pipe. If it further concerns a pipe lying underground, this makes welding difficult and expensive. Further, the pipe liner is often made of a plastic, for example polyethylene, with the result that during welding there is a risk that the plastic will melt.

The object of the present invention is to provide an improved coupling system that simplifies the fitting of a coupling piece on a pipe provided with a pipe liner, in particular an underground concrete, plastic or cast iron pipe.

The object is achieved with a coupling system according to the preamble of claim 1, which is characterized in that the coupling piece further comprises a second cylindrical part lying in line with the first cylindrical part, which second cylindrical part fits into the pipe liner, the system further comprising clamping means for fixing the second cylindrical part in a clamping manner against the pipe liner.

When the coupling piece is being fitted on a pipe, the second cylindrical part needs now only be placed in the end of the pipe, in which case the second cylindrical part lies inside the pipe liner. By using the clamping means, the second cylindrical part is then clamped against the pipe liner, so that a sturdy connection is produced between the pipe, the pipe liner and the coupling piece.

The clamping means preferably comprise a clamping bush, which is to be pressed into the second cylindrical part, the second cylindrical part being expandable under the influence of the clamping bush. Such a clamping bush is simple to fit in the second cylindrical part, in such a way that the second cylindrical part is expanded in the direction of the pipe liner, so that the second cylindrical part connects in a sealing manner to the pipe liner.

The clamping bush advantageously has on the outside a conical clamping face, and the coupling piece has on the inside a corresponding conical clamping face that interacts with it, which clamping face is situated at least in the region of the second cylindrical part (not necessarily - along its entire length). In a variant said clamping face runs through into the first cylindrical part.

In a special embodiment the clamping means further comprise a fixing bush, which can be placed between the pipe and the pipe liner, in which case the pipe liner and the second cylindrical part of the coupling piece can be clamped against the fixing bush surrounding them. The use of such a fixing bush is particularly advantageous if the inside diameter of the pipe is irregular, so that it is difficult to clamp the second cylindrical part with the clamping bush or other clamping means in a sealing manner against the pipe liner. By providing the fixing bush between the pipe and the pipe liner, a good cylindrical surface is obtained, against which the second cylindrical part of the coupling piece can be clamped by means of the clamping bush or other clamping means.

The coupling system according to the invention can be used in all kinds of places. It is advantageously used in particular in the case of underground pipes, for example sewage pipes, water supply pipes and gas pipes.

The invention further relates to a device for clamping a clamping bush according to the invention, and to a method in the case of which use is made of a coupling system according to the invention.

Further advantages and features of the coupling system according to the invention are explained with reference to a drawing, in which:
Fig. 1 shows a cross section of a first embodiment of a coupling system according to the invention, which is fitted on a pipe provided with a pipe liner;
Fig. 2 shows a cross section of a second preferred embodiment of a coupling system according to the invention, which is fitted on a pipe provided with a pipe liner; and
Fig. 3 shows a cross section of the coupling system according to Figure 2, in the case of which use is made of a preferred variant of the device for clamping the clamping bush.

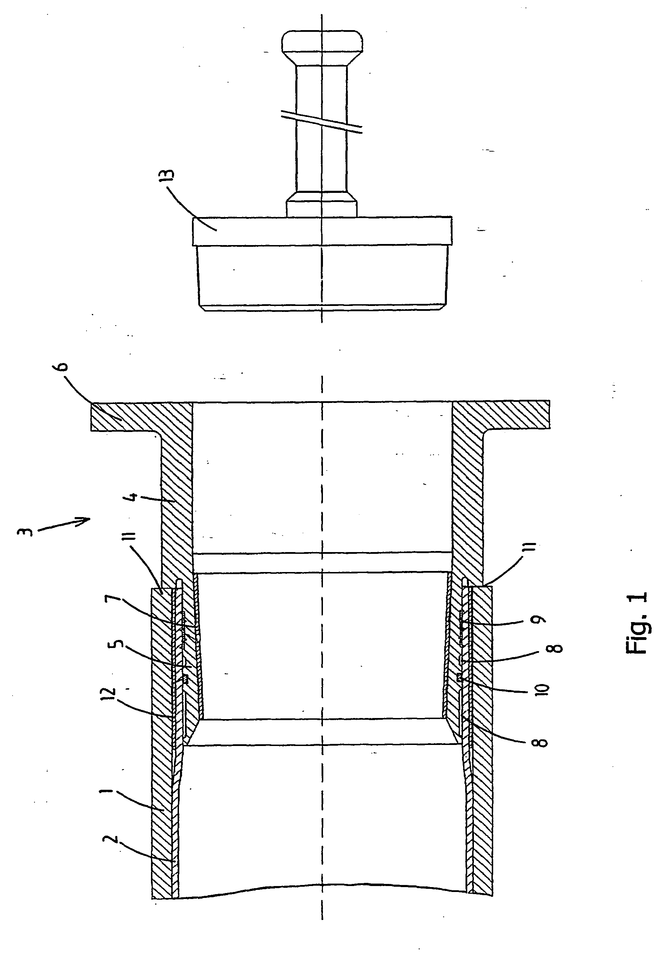

Figure 1 shows a pipe, indicated in its entirety by the reference numeral 1, which pipe is provided with a pipe liner 2. Such a pipe liner 2 is generally made of plastic and is used in particular to repair damaged pipes 1, possibly running underground. The plastic pipe liner 2 is of the type, for example, that is placed in a slightly collapsed state in the pipe and is subsequently inflated using a medium (for example, steam), so that the pipe liner 2 comes to rest against the wall of the pipe 1.

It is pointed out that the relationship between the wall thicknesses of the pipe 1 and the pipe liner 2 can also be different than that shown in the drawing, for example in the case of steel pipes 1 it is conceivable for the pipe liner 2 to have a greater wall thickness than the pipe 1.

A coupling piece 3 is fixed on the end of the pipe 1. The coupling piece 3 has a first cylindrical part 4 that lies in line with the pipe 1, and a second cylindrical part 5 that projects into the end of the pipe 1 and the pipe liner 2. On the end of the coupling piece 3 situated away from the pipe, a flange 6 is-provided in this example, for coupling to said end an object that is likewise provided with a corresponding flange. Instead of the flange 6, the end of the coupling piece 3 facing away from the pipe 1 can be designed in a totally different way, for example it can be provided with a spigot, socket or the like.

The second cylindrical part 5 of the coupling piece 3 is of an expandable design as far as its diameter is concerned, and is clamped firmly against the pipe liner 2 by means of a clamping bush 7, so that a sealing connection between the coupling piece 3 and the pipe liner 2 is obtained.

The outside of the clamping bush 7 has a conical clamping face, which interacts with a corresponding conical clamping face on the inside of the second cylindrical part 5 of the coupling piece 3.

The clamping bush 7 and the coupling piece 3 are preferably provided with locking means for locking the position of the clamping bush 7 relative to the coupling piece. The locking is, for example, important when the coupling piece 3 is made of plastic and the clamping bush 7 is made of metal. Owing to these different materials, different expansions occur when there are temperature fluctuations, with the result that a slight movement of the clamping bush 7 relative to the coupling piece 3 can occur in each case. Since these movements will be in the same direction in each case, the clamping bush 7 will in this way be able to work loose if locking means are not provided. The same effect can also occur when fluctuations in pressure occur in the pipe, under the influence of a difference in modulus of elasticity between the clamping bush and the coupling piece.

In the example shown the locking means comprise a profiling on the conical clamping face of the clamping bush 7, in order to increase the grip of the clamping bush 7 on the second cylindrical part 5 of the coupling piece 3. This profiling may comprise a sawtooth profile. The clamping bush 7 can also be provided with an end that is flanged through an acute angle and grips firmly on the coupling piece 3.

In an alternative embodiment (not shown) provision can be made for the clamping bush 7 to be of such a length that in the fitted state said clamping bush projects into the first cylindrical part 4 of the coupling piece. If the clamping bush is made of metal and the coupling piece of plastic, this produces, on the one hand, a strengthening of the transition between the first and second cylindrical parts 4, 5. Furthermore, the extended design of the clamping bush can be utilized to lock the clamping bush part projecting into the first cylindrical part 4 relative to the coupling piece.

In the preferred embodiment shown in Figure 1 the diameter of the conical clamping face decreases in the direction of the free end of the second cylindrical part 5. When the coupling piece 3 is being fitted on the pipe 1 provided with the pipe liner 2, the coupling piece 3 is first placed in the pipe liner 2, after which the clamping bush 7 can be placed by way of the first cylindrical part 4 of the coupling piece 3 in the second cylindrical part 5.

In order to obtain a smooth transition at the free end of the second cylindrical part 5 from the coupling piece 3 to the pipe liner 2, a bevel is provided on the free end of the second cylindrical part 5. The transition on the inside from the first cylindrical part 4 to the second cylindrical part 5 is also shaped in such a way that a smooth transition is obtained there.

A profile is provided on the outside of the second cylindrical part 5, which profile can have various functions. First, circular circumferential grooves may be provided in the second cylindrical part 5, so that the part 5 can compensate for tolerances in dimension and cross-sectional shape of pipe liner 2. Furthermore, a circumferential groove may be provided for the accommodation of a grip ring 9, in order to increase the grip of the second cylindrical part 5 on the pipe liner 2. In the embodiment shown a further circumferential groove is provided for the accommodation of a sealing ring 10, in order to improve the seal between the second cylindrical part 5 of the coupling piece 3 and the pipe liner 2.

The first cylindrical part 4 of the coupling piece 3 has on the end of it that faces the pipe 1 an end face 11 that rests against the head end of the pipe 1. In this way a good positioning of the coupling piece 3 relative to the pipe 1 and the pipe liner 2 is obtained, and good support for the coupling piece 3 in the pipe 1 is also obtained.

A fixing bush 12 is also shown in the drawing, which fixing bush is fitted on the end of the pipe 1, between the pipe 1 and the pipe liner 2. By placing the fixing bush 12, it is possible, for example in a case where the pipe 1 has an irregular inside diameter, still to obtain a good external retention around the entire circumference, and thereby to obtain a good clamping action between the second cylindrical part 5 and the pipe liner 2. This is particularly advantageous if the pipe 1 is damaged to such an extent that without such a fixing bush the second cylindrical part 5, after being clamped by the clamping bush 7, does not close up well around the entire circumference of the pipe liner 2. The length of the fixing bush 12 substantially corresponds to the length of the second cylindrical part 5.:

The coupling piece 3, in particular the second cylindrical part 5, is preferably made of plastic. The clamping bush 7 and the fixing bush 12 are preferably made of metal, in particular stainless steel.

Fig. 1 further shows a tool 13, which is suitable for pressing the clamping bush 7 from the side of the coupling piece 3 facing away from the pipe 1 into the second cylindrical part 5, in order to obtain the clamping action between the clamping bush 7 and the pipe liner 2.

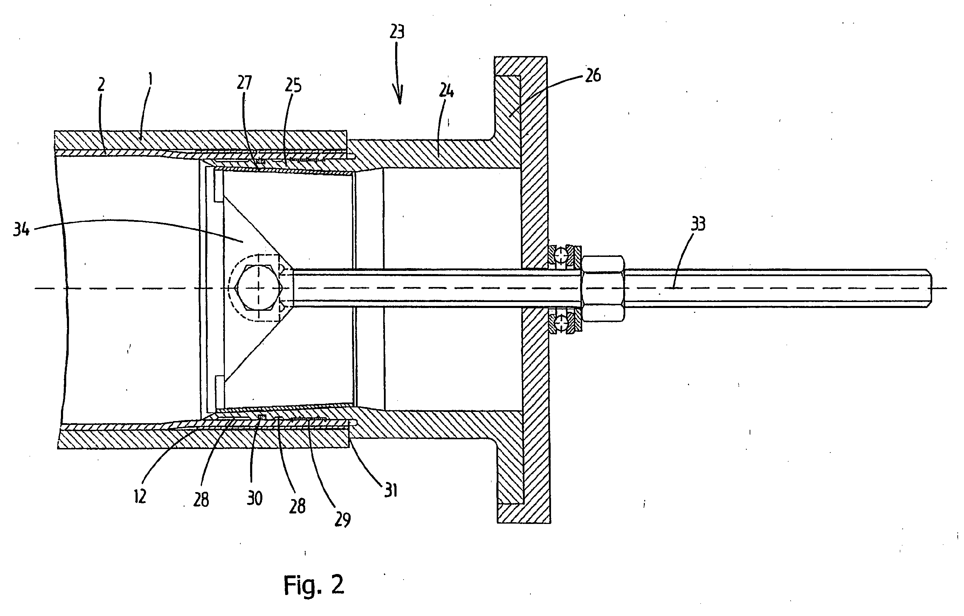

A second preferred embodiment of the coupling system according to the invention is shown in Figure 2. The coupling system shown comprises a coupling piece 23, which is provided with a first cylindrical part 24, a second cylindrical part 25 and a flange 26. The second cylindrical part 25 is placed in the end of a pipe 1 provided with a preferably plastic pipe liner 2. The first cylindrical part 24 lies in line with the pipe 1, the end of the first cylindrical part 24 facing the pipe 1 being provided with an end face 31 that rests against the head end face of the pipe 1.

A fixing bush 12 is provided between the pipe 1 and the pipe liner 2, for example in order to compensate for any irregularities in the cylindricity of the pipe 1. If the pipe 1 and the pipe liner 2 situated inside it are of a substantially cylindrical shape, it is possible to dispense with use of the fixing bush 12.

By means of the clamping bush 27, the second cylindrical part 25 is clamped against the pipe liner 2 and the fixing bush 12 surrounding it. The clamping bush 27 has a conical form, the diameter of the second cylindrical part 25 increasing in the direction of its free end, so that a conical clamping face is obtained on the outside of the clamping bush 27, which clamping face interacts with a conical clamping face provided on the inside of the second cylindrical part 25. A surface profiling, for example a sawtooth profile, is preferably provided on the conical clamping face of the clamping bush 27, in order to increase the grip of the clamping bush 27 on the second cylindrical part 25.

Two circumferential grooves 28 are provided on the outside of the second cylindrical part 25, which circumferential grooves form two circular chambers, so that the second cylindrical part 25 gives an additional flexibility during the clamping of the clamping bush 27, making it possible to compensate for unevennesses in the pipe liner 2. On the outside of the second cylindrical part 25, a circumferential groove is further provided for the accommodation of a grip ring 29, in order to increase the grip of the second cylindrical part 25 on the pipe liner 2, in addition to a circumferential groove for the accommodation of a sealing ring 30, in particular an O-ring, in order to improve the seal between the second cylindrical part 25 and the pipe liner 2.

When the coupling piece 23 according to the preferred embodiment shown in Figure 2 is being fitted, the pipe liner 2, if not already present, is first placed in the pipe 1, and both pipes are sawn off to size. If desired here, the fixing bush 12 is first placed in the pipe 1, or the fixing bush 12 is placed later between the pipe liner 2 and the pipe 1.

The clamping bush 27 is then placed in the end of the second cylindrical part 25 of the coupling piece 23. After that, the tool 33 is introduced into the coupling piece, a clamping bush support in the form of a plate 34 resting against the free end of the clamping bush 27.

The assembly, comprising coupling piece 23, clamping bush 27 and tool 33, is then inserted into the end of pipe liner 2, until end face 31 is resting against the pipe 1. If desired, the tool 33 and the plate 34 may not be fitted until after the coupling piece 23 and the clamping bush 27 have been inserted into the pipe liner 2.

By means of tool 33, the clamping bush 27 is then drawn further into the coupling piece 23 -until, through expansion of the cylindrical part 25, the coupling piece 23 is anchored securely in the end of the pipes 1 and 2. After tilting of the plate 34, the tool 33 can be removed.

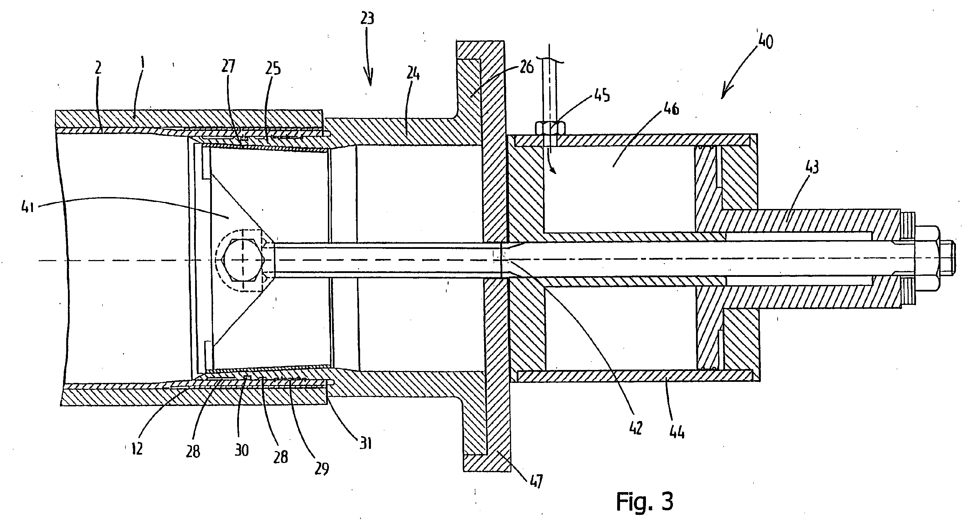

Figure 3 shows the coupling system of Figure 2. However, a different device 40 is provided for placing the clamping bush 27 in the correct position.

The device 40 comprises as the clamping bush support a plate 41, which is designed in the same way as the plate 34 of Figure 2. The plate 41 is designed to rest against the head end of the clamping bush, in such a way that the clamping bush 27 can be moved with a movement of the plate 41 in the longitudinal direction of the pipe 1, and-with such a movement can be clamped in the correct position.

The plate 41 is connected to a first end of a pull rod 42 in such a way that said plate can swivel. The second end of the pull rod 42 is connected to a piston 43, which is accommodated so that it is movable in the hydraulic cylinder 44. The cylinder 44 has a connection 45 for connecting a pump (not shown), by means of which a medium under pressure can be introduced into the cylinder chamber 46. The device further comprises a coupling piece support in the form of a supporting plate 47, which is designed to be complementary to the flange 26, and which transmits the reaction force from the pressure on the cylinder to the coupling piece 23.

The fitting is performed in the same way as that of the embodiment of Figure 2. First, if necessary, the pipe liner 2 is placed in the pipe 1, and the two pipes are sawn off to size. If desired, a fixing bush 12 is placed in the pipe 1. The clamping bush 27 is then placed in the end of the second cylindrical part 25 of the coupling piece 23. After that, the device 40 is placed in the coupling piece, plate 41 resting against the free end of the clamping bush 27.

The assembly, comprising coupling piece 23, clamping bush 27 and device 41, is then inserted into the end of pipe liner 2, until end face 31 is resting against the pipe 1. If desired, the device 40 may not be fitted in the coupling piece until after the coupling piece 23 and clamping bush 27 have been placed in the pipe liner 2.

By now introducing a medium under pressure into the cylinder chamber 46, a force directed away from the pipe will be exerted upon the piston 43, with the result that the clamping bush 27 is pulled by the plate 41 into its clamping fit. Through the expansion of the second cylindrical part 25, the coupling piece 23 is then anchored securely in the end of the pipes 1 and 2. The device 40 and clamping bush 27 are shown in this clamped position in Figure 3. After the clamping bush 27 has been clamped in position, the piston can be moved back, and the plate 41 can be tilted and removed from the coupling piece 23.

The pump used can be a hand pump or a mechanically driven pump. If desired, a pressure safety device can be used in order to rule out-excess pressure in the cylinder chamber 46.

The stroke of the piston 43 is advantageously equal to the desired movement of the clamping bush 27 relative to the second cylindrical part 25. This ensures that the clamping bush 27 is not drawn too far into the second cylindrical part 25, and the risk of damage is therefore avoided.

The device 40 can advantageously be used for a series of pipes of different sizes, in the case of a different size the plate 41 and the supporting plate 47 needing only to be replaced by a plate 41 and supporting plate 47 specifically suitable for that size.

## Claims

1. Coupling system intended for fitting in an end of a pipe that is provided with a pipe liner, comprising a coupling piece that is designed for coupling the pipe to an object, which coupling piece comprises a first cylindrical part that lies in line with the pipe after fitting, **characterized in that** the coupling piece further comprises a second cylindrical part lying in line with the first cylindrical part, which second cylindrical part fits into the pipe liner, the system further comprising clamping means for fixing the second cylindrical part in a clamping manner against the pipe liner.

2. Coupling system according to claim 1, **characterized in that** the clamping means comprise a clamping bush, which is to be pressed into the second cylindrical part, the second cylindrical part being expandable under the influence of the clamping bush.

3. Coupling system according to claim 2, **characterized in that** the clamping bush has on the outside a conical clamping face, and **in that** the coupling piece has on the inside circumference a corresponding conical clamping face interacting with it, which clamping face is situated at least in the region of the second cylindrical part of the coupling piece.

4. Coupling system according to claim 3, **characterized in that** the diameter of the conical clamping face of the coupling piece increases in the direction of the free end of the second cylindrical part.

5. Coupling system according to claim 3, **characterized in that** the diameter of the conical clamping face of the coupling piece decreases in the direction of the free end of the second cylindrical part.

6. Coupling system according to one of claims 3 - 5, **characterized in that** the clamping bush is of such a length that when it is pressed into the coupling piece the clamping bush is situated partially in the first cylindrical part of the coupling piece.

7. Coupling system according to one or more of claims 3 - 6, **characterized in that** the system comprises locking means for locking the position of the clamping bush relative to the coupling piece.

8. Coupling system according to claim 7, **characterized in that** the clamping face of the clamping bush is provided with a surface profile, in order to increase the grip on the clamping face of the second cylindrical part.

9. Coupling system according to claim 7, **characterized in that** on the outside of the second cylindrical part a circumferential groove is provided for the accommodation of a grip ring, the grip ring being pressed into the pipe liner by pressing in the clamping bush.

10. Coupling system according to one of claims 7 - 9, **characterized in that** on the outside of the second cylindrical part at least one groove extending around the circumference of the second cylindrical part is provided for the accommodation of a sealing ring.

11. Coupling system according to one or more of the preceding claims, **characterized in that** the first cylindrical part comprises an end face that after fitting rests against the head end of the pipe.

12. Coupling system according to one or more of the preceding claims, **characterized in that** the clamping means further comprise a fixing bush, which can be placed between the pipe and the pipe liner, it being possible to clamp the pipe liner and the second cylindrical part of the coupling piece against the fixing bush.

13. Coupling system according to claim 12, **characterized in that** the length of the fixing bush substantially corresponds to the length of the second cylindrical part.

14. Coupling system according to one or more of the preceding claims, **characterized in that** the coupling piece is made of plastic.

15. Coupling system according to one or more of claims 2 - 14, **characterized in that** the clamping bush and/or fixing bush are/is made of metal, preferably, of stainless steel.

16. Coupling system according to one or more of claims 2 - 15, **characterized in that** the coupling system comprises a device for clamping the clamping bush, comprising a clamping bush support that is suitable for placing at least partially against a head end of the clamping bush, and a rod that at a first end is coupled to the clamping bush support and is connected by a second end to movement means, which movement means can move the plate in such a way that the clamping bush is clamped in the second cylindrical part.

17. Coupling system according to claim 16, in which the rod is a pull rod, and the clamping bush support is hingedly connected to the pull rod, and in which the device further comprises a coupling piece support that is designed to rest against a head end of the coupling piece, in particular a flange, and to transmit a reaction force from the movement means to the coupling piece.

18. Coupling system according to claim 16 or 17, in which the movement means comprise a hydraulic cylinder and a hydraulic piston that is movable in the cylinder, the second end of the rod being fixed to the piston.

19. Coupling system according to claim 18, in which the stroke of the piston is equal to the desired movement of the clamping bush.

20. Method of coupling an object to a pipe provided with a pipe liner, in which use is made of a coupling system according to one or more of claims 1 - 19, comprising the steps of
- placing the coupling piece in the pipe so that the first cylindrical part lies in line with the pipe liner and the second cylindrical part lies in the pipe liner, and
- fixing the second cylindrical part in a clamping manner against the pipe liner by using the clamping means.

21. Method according to claim 20, wherein the step of fixing the second cylindrical part comprises the use of a clamping device which presses during filling a clamping bush into the second cylindrical part to expand the second cylindrical part.

## Patentansprüche

1. Kupplungssystem zur Anbringung in einem Ende eines Rohres, das mit einer Rohrauskleidung versehen ist, mit einem Kuppelstück, das zum Ankuppeln des Rohres an einen Gegenstand ausgebildet ist, welches Kuppelstück einen ersten zylindrischen Teil umfaßt, der nach der Anbringung in einer Reihe mit dem Rohr liegt, **dadurch gekennzeichnet, daß** das Kuppelstück ferner einen zweiten zylindrischen Teil umfaßt, der in einer Reihe mit dem ersten zylindrischen Teil liegt, welcher zweite zylindrische Teil sich in die Rohrauskleidung einfügt, wobei das System ferner eine Klemmeinrichtung zum Festlegen des zweiten zylindrischen Teils an der Rohrauskleidung durch Klemmwirkung umfaßt.

2. Kupplungssystem nach Anspruch 1, **dadurch gekennzeichnet, daß** die Klemmeinrichtung eine Klemmbuchse umfaßt, die in den zweiten zylindrischen Teil einzudrücken ist, wobei der zweite zylindrische Teil unter dem Einfluß der Klemmbuchse aufweitbar ist.

3. Kupplungssystem nach Anspruch 2, **dadurch gekennzeichnet, daß** die Klemmbuchse auf der Außenseite eine konische Klemmfläche aufweist und daß das Kuppelstück auf seinem Innenumfang eine mit ihr zusammenwirkende entsprechende konische Klemmfläche besitzt, welche Klemmfläche zumindest im Bereich des zweiten zylindrischen Teils des Kuppelstücks gelegen ist.

4. Kupplungssystem nach Anspruch 3, **dadurch gekennzeichnet, daß** der Durchmesser der konischen Klemmfläche des Kuppelstücks in Richtung des freien Endes des zweiten zylindrischen Teils zunimmt.

5. Kupplungssystem nach Anspruch 3, **dadurch gekennzeichnet, daß** der Durchmesser der konischen Klemmfläche des Kuppelstücks in Richtung des freien Endes des zweiten zylindrischen Teils abnimmt.

6. Kupplungssystem nach einem der Ansprüche 3 bis 5, **dadurch gekennzeichnet, daß** die Klemmbuchse eine solche Länge hat, daß, wenn sie in das Kuppelstück eingedrückt ist, die Klemmbuchse teilweise im ersten zylindrischen Teil des Kuppelstücks gelegen ist.

7. Kupplungssystem nach einem oder mehreren der Ansprüche 3 bis 6, **dadurch gekennzeichnet, daß** das System Verriegelungsmittel zum Festlegen der Position der Klemmbuchse in Bezug auf das Kuppelstück umfaßt.

8. Kupplungssystem nach Anspruch 7, **dadurch gekennzeichnet, daß** die Klemmfläche der Klemmbuchse mit einem Oberflächenprofil versehen ist, um den Festsitz an der Klemmfläche des zweiten zylindrischen Teils zu erhöhen.

9. Kupplungssystem nach Anspruch 7, **dadurch gekennzeichnet, daß** auf der Außenseite des zweiten zylindrischen Teils eine Umfangsnut zur Aufnahme eines Spannringes vorgesehen ist, wobei der Spannring in die Rohrauskleidung durch Eindrücken der Klemmbuchse eingedrückt wird.

10. Kupplungssystem nach einem der Ansprüche 7 bis 9, **dadurch gekennzeichnet, daß** auf der Außenseite des zweiten zylindrischen Teils zumindest eine sich über den Umfang des zweiten zylindrischen Teils erstreckende Nut zur Aufnahme eines Dichtungsringes vorgesehen ist.

11. Kupplungssystem nach einem oder mehreren der vorgehenden Ansprüche, **dadurch gekennzeichnet, daß** der erste zylindrische Teil eine Endfläche umfaßt, die nach der Anbringung am Kopfende des Rohres anliegt.

12. Kupplungssystem nach einem oder mehreren der vorgehenden Ansprüche, **dadurch gekennzeichnet, daß** die Klemmeinrichtung ferner eine Fixierbuchse umfaßt, die zwischen dem Rohr und der Rohrauskleidung plaziert werden kann, wobei es möglich ist, die Rohrauskleidung und den zweiten zylindrischen Teil des Kuppelstücks an der Fixierbuchse festzuklemmen.

13. Kupplungssystem nach Anspruch 12, **dadurch gekennzeichnet, daß** die Länge der Fixierbuchse im wesentlichen der Länge des zweiten zylindrischen Teils entspricht.

14. Kupplungssystem nach einem oder mehreren der vorhergehenden Ansprüche, **dadurch gekennzeichnet, daß** das Kuppelstück von Kunststoff gebildet ist.

15. Kupplungssystem nach einem der Ansprüche 2 bis 14, **dadurch gekennzeichnet, daß** die Klemmbuchse und/oder die Fixierbuchse von Metall, vorzugsweise Edelstahl, gebildet sind/ist.

16. Kupplungssystem nach einem oder mehreren der Ansprüche 2 bis 15, **dadurch gekennzeichnet, daß** das Kupplungssystem eine Vorrichtung zum Festklemmen der Klemmbuchse umfaßt, mit einer Klemmbuchsenabstützung, die für eine Plazierung zumindest teilweise an einem Kopfende der Klemmbuchse geeignet ist, und einer Stange, die an einem ersten Ende mit der Klemmbuchsenabstützung gekuppelt und durch ein zweites Ende mit einer Bewegungseinrichtung verbunden ist, welche Bewegungseinrichtung die Platte in der Weise bewegen kann, daß die Klemmbuchse im zweiten zylindrischen Teil festgeklemmt wird.

17. Kupplungssystem nach Anspruch 16, bei dem die Stange eine Zugstange ist und die Klemmbuchsenabstützung gelenkig mit der Zugstange verbunden ist, und bei dem die Vorrichtung ferner eine Kuppelstückabstützung umfaßt, die für eine Anlage an einem Kopfende des Kuppelstücks, insbesondere einem Flansch, und zur Übertragung einer Reaktionskraft von der Bewegungseinrichtung auf das Kuppelstück ausgebildet ist.

18. Kupplungssystem nach Anspruch 16 oder 17, bei dem die Bewegungseinrichtung einen Hydraulikzylinder und einen Hydraulikkolben umfaßt, der im Zylinder bewegbar ist, wobei das zweite Ende der Stange am Kolben festgelegt ist.

19. Kupplungssystem nach Anspruch 18, bei dem der Hub des Kolbens gleich der gewünschten Bewegung der Klemmbuchse ist.

20. Verfahren zum Kuppeln eines Gegenstands mit einem mit einer Rohrauskleidung versehenen Rohr, bei dem von einem Kupplungssystem nach einem oder mehreren der Ansprüche 1 bis 19 Gebrauch gemacht wird, mit den Schritten, daß
- das Kuppelstück so in das Rohr eingebracht wird, daß der erste zylindrische Teil in einer Reihe mit der Rohrauskleidung und der zweite zylindrische Teil in der Rohrauskleidung liegt und
- der zweite zylindrische Teil mit Klemmwirkung an der Rohrauskleidung unter Verwendung der Klemmeinrichtung festgelegt wird.

21. Verfahren nach Anspruch 20, bei dem der Schritt der Festlegung des zweiten zylindrischen Teils die Verwendung einer Klemmvorrichtung umfaßt, die bei der Anbringung eine Klemmbuchse in den zweiten zylindrischen Teil zum Aufweiten des zweiten zylindrischen Teils drückt.

## Revendications

1. Système de raccordement destiné à être monté dans une extrémité d'une canalisation qui est pourvu d'une chemise de canalisation, comprenant un élément de raccordement qui est conçu pour raccorder la canalisation à un objet, lequel élément de raccordement comprend une première partie cylindrique qui est alignée sur la canalisation après le montage, **caractérisé en ce que** l'élément de raccordement comprend en outre une seconde partie cylindrique alignée sur la première partie cylindrique, laquelle seconde partie cylindrique est montée à l'intérieur de la chemise de canalisation, le système comprenant en outre des moyens de serrage destinés à fixer la seconde partie cylindrique par serrage contre la chemise de canalisation.

2. Système de raccordement selon la revendication 1, **caractérisé en ce que** les moyens de serrage comprennent une douille de serrage; qui doit être pressée à l'intérieur de la seconde partie cylindrique, la seconde partie cylindrique étant susceptible de se dilater sous l'effet de la douille de serrage.

3. Système de raccordement selon la revendication 2, **caractérisé en ce que** la douille de serrage présente sur le côté extérieur une face de serrage conique, et **en ce que** l'élément de raccordement présente sur la circonférence interne une face de serrage conique correspondante interagissant avec celui-ci, laquelle face de serrage est située au moins dans la zone de la seconde partie cylindrique de l'élément de raccordement.

4. Système de raccordement selon la revendication 3, **caractérisé en ce que** le diamètre de la face de serrage conique de l'élément de raccordement augmente dans la direction de l'extrémité libre de la seconde partie cylindrique.

5. Système de raccordement selon la revendication 3, **caractérisé en ce que** le diamètre de la face de serrage conique de l'élément de raccordement diminue dans la direction de l'extrémité libre de la seconde partie cylindrique.

6. Système de raccordement selon l'une quelconque des revendications 3 à 5, **caractérisé en ce que** la douille de serrage présente une longueur telle que, lorsqu'elle est pressée à l'intérieur de l'élément de raccordement, la douille de serrage est située en partie dans la première partie cylindrique de l'élément de raccordement.

7. Système de raccordement selon l'une ou plusieurs des revendications 3à6, **caractérisé en ce que** le système comprend des moyens de verrouillage destinés à verrouiller la position de la douille de serrage par rapport à l'élément de raccordement.

8. Système de raccordement selon la revendication 7, **caractérisé en ce que** la face de serrage de la douille de serrage est pourvue d'un profil de surface, afin d'augmenter la prise sur la face de serrage de la seconde partie cylindrique.

9. Système de raccordement selon la revendication 7, **caractérisé en ce que** sur le côté extérieur de la seconde partie cylindrique, une rainure circonférentielle est prévue pour loger un collier de serrage, le collier de serrage étant pressé à l'intérieur de la chemise de canalisation en effectuant une pression dans la douille de serrage.

10. Système de raccordement selon l'une des revendications 7 à 9, **caractérisé en ce que** sur le côté extérieur de la seconde partie cylindrique, au moins une rainure s'étendant autour de la circonférence de la seconde partie cylindrique est prévue pour loger une bague d'étanchéité.

11. Système de raccordement selon l'une ou plusieurs des revendications précédentes, **caractérisé en ce que** la première partie cylindrique comprend une face d'extrémité qui, après le montage, repose contre l'extrémité de tête de la canalisation.

12. Système de raccordement selon l'une ou plusieurs des revendications précédentes, **caractérisé en ce que** les moyens de serrage comprennent en outre une douille de fixation, qui peut être placée entre la canalisation et la chemise de canalisation, sachant qu'il est possible de serrer la chemise de canalisation et la seconde partie cylindrique de l'élément de raccordement contre la douille de fixation.

13. Système de raccordement selon la revendication 12, **caractérisé en ce que** la longueur de la douille de fixation correspond sensiblement à la longueur de la seconde partie cylindrique.

14. Système de raccordement selon l'une ou plusieurs des revendications précédentes, **caractérisé en ce que** l'élément de raccordement est fabriqué en plastique.

15. Système de raccordement selon l'une ou plusieurs des revendications 2 à 14, **caractérisé en ce que** la douille de serrage et/ou la douille de fixation sont fabriquées en métal, de préférence en acier inoxydable.

16. Système de raccordement selon l'une ou plusieurs des revendications 2 à 15, **caractérisé en ce que** le système de raccordement comprend un dispositif destiné à serrer la douille de serrage comprenant un support de douille de serrage qui convient pour être placé au moins en partie contre une extrémité de tête de la douille de serrage, et une tige qui, à la première extrémité, est couplée au support de douille de serrage et est raccordée par une seconde extrémité à des moyens de déplacement, lesquels moyens de déplacement peuvent déplacer la plaque de telle sorte que la douille de serrage est serrée dans la seconde partie cylindrique.

17. Système de raccordement selon la revendication 16, dans lequel la tige est une tige d'éjection, et le support de douille de serrage est raccordé de manière articulée à la tige d'éjection, et dans lequel le dispositif comprend en outre un support d'élément de raccordement qui est conçu pour reposer contre une extrémité de tête de l'élément de raccordement, en particulier une bride, et pour transmettre une force réactionnelle provenant des moyens de déplacement à l'élément de raccordement.

18. Système de raccordement selon la revendication 16 ou 17, dans lequel les moyens de déplacement comprennent un cylindre hydraulique et un piston hydraulique qui est mobile dans le cylindre, la seconde extrémité de la tige étant fixée au piston.

19. Système de raccordement selon la revendication 18, dans lequel la course du piston est égale au déplacement souhaité de la douille de serrage.

20. Procédé de raccordement d'un objet à une canalisation pourvue d'une chemise de canalisation, dans lequel on utilise un système de raccordement selon l'une ou plusieurs des revendications 1 à 19, comprenant les étapes de
➢ placement de l'élément de raccordement dans la canalisation de sorte que la première partie cylindrique est alignée sur la chemise de canalisation et la seconde partie cylindrique est alignée sur la chemise de canalisation, et
➢ fixation de la seconde partie cylindrique par serrage contre la chemise de canalisation en utilisant les moyens de serrage.

21. Procédé selon la revendication 20, dans lequel l'étape de fixation de la seconde partie cylindrique comprend l'utilisation d'un dispositif de serrage qui effectue une pression pendant le montage d'une douille de serrage à l'intérieur de la seconde partie cylindrique pour dilater la seconde partie cylindrique.
